# FASCICULE DE BREVET EUROPEEN

(11) **EP 2 168 891 B1**
(45) Date de publication et mention de la délivrance du brevet: **04.07.2012**
(21) Numéro de dépôt: 09170959.2
(22) Date de dépôt: 22.09.2009
(51) Int. Cl.: B65G 35/04, B65G 47/57

(54) **Dispositif de transport vertical d'objets**
Vorrichtung zum vertikalen Transport von Objekten
Device for vertical transport of objects

(30) Priorité: 30.09.2008 FR 0856558
(43) Date de publication de la demande: 31.03.2010
(73) Titulaire: Pharmacie Automatisme SAS, 83520 Roquebrune sur Argens (FR)
(72) Inventeur: Nizard, Stéphane, 06000, NICE (FR)
(74) Mandataire: Decobert, Jean-Pascal

(56) Documents cités:
- EP-A- 0 677 476
- DE-U1- 29 901 222
- GB-A- 2 310 203
- US-A- 6 164 502

## Description

La présente invention concerne un dispositif de transport vertical d'objets d'après la revendication 1 ainsi qu'un procédé d'après la revendication 9.

Elle trouvera son application pour des appareils de transport d'objets entre deux zones de hauteurs différentes tel qu'un ascenseur.

On connaît du document GB-A-2 277 512, un distributeur d'objets tels que des canettes ou des bouteilles, comprenant un dispositif d'ascenseur. Le dispositif d'ascenseur comprend une bande flexible montée telle un tapis roulant, entre deux roulements: l'un supérieur, et l'autre inférieur. La bande flexible est munie de supports pivotants destinés à transporter l'objet entre une zone de chargement et une zone de déchargement.

Le positionnement de la bande du dispositif d'ascenseur impose la présence d'un support pivotant nécessaire au transport des objets.

Or, la présence des supports pivotants complique le dispositif. De plus, avec ce dispositif, un seul objet est transporté par support. Ainsi, le transport d'une pluralité de produits n'est pas rapide. EP 0 677 476 A1 décrit un dispositif correspondant au préambule de la revendication 1.

Il existe donc le besoin de proposer un dispositif de transport vertical d'objets amélioré facile à mettre en oeuvre et ayant une rapidité de délivrance supérieure à l'état de la technique.

A cet effet, la présente invention concerne un dispositif pour le transport vertical d'objets comprenant une bande flexible suspendue par ses extrémités, formant ainsi un U avec deux pans verticaux entre lesquels sont placés, par des moyens de chargement, les objets à transporter. Le dispositif comprend des moyens d'enroulement destinés à enrouler et à dérouler la bande de sorte à faire monter et descendre la base du U où se trouvent les objets.

Le dispositif selon l'invention est simple et rapide d'utilisation. En effet, plusieurs objets peuvent être disposés entre les deux pans de la bande pour être transportés simultanément. De plus, le dispositif ne nécessite pas beaucoup de pièces interagissant. Seuls une bande et des moyens d'entraînement tels des moyens d'enroulement sont nécessaires pour le transport de plusieurs objets.

Un pan de la bande comprend une fenêtre destinée à permettre le passage des objets à transporter pour les placer entre les pans de la bande.

De sorte à faciliter encore le fonctionnement du dispositif selon l'invention, seule une extrémité de la bande est reliée aux moyens d'enroulement, l'autre extrémité fixe.

Cette extrémité reliée aux moyens d'enroulement, correspond au pan muni de la fenêtre. Ainsi, les objets sont introduits entre les pans de la bande au travers de la fenêtre. Puis, le pan de la bande muni de la fenêtre est enroulé sur les moyens d'enroulement. La fenêtre remonte et les objets s'éloignent de cette dernière ce qui évite ainsi leur chute par la fenêtre.

Par cette disposition, le dispositif selon l'invention ne nécessite aucun moyen de fermeture, tel qu'une porte guillotine, pour fermer le dispositif de transport et maintenir les objets lors du transport.

D'autres buts et avantages apparaîtront au cours de la description qui suit d'un mode préféré de réalisation de l'invention qui n'en est cependant pas limitatif.

Il convient tout d'abord de rappeler que la présente invention concerne un dispositif de transport vertical d'objets comprenant une bande flexible et des moyens d'entraînement caractérisé par le fait que la bande est suspendue par ses extrémités entre deux points de sorte à prendre une forme en U avec deux pans sensiblement verticaux, de manière à recevoir les objets entre les deux pans, un des deux pans comprend une fenêtre destinée au passage des objets entre les deux pans de la bande et qu'il comprend des moyens de chargement destinés à acheminer les objets au travers de la fenêtre jusqu'entre les pans de la bande.

Suivant l'invention, le dispositif de transport vertical est tel que:
- un des deux pans comprend une fenêtre destinée au passage des objets entre les deux pans de la bande,
- une première extrémité de la bande est reliée à un point fixe et une deuxième extrémité de la bande est reliée aux moyens d'entraînement,
- les moyens d'entraînement sont des moyens d'enroulement du pan de la bande muni de la fenêtre,

Préférentiellement :
- les moyens d'enroulement sont agencés pour être plus hauts que le point fixe,
- le point fixe est agencé pour être plus haut que les moyens d'enroulement,
- la bande forme un plan incliné en direction du point fixe lorsqu'elle est tendue entre les moyens d'enroulement et le point fixe,
- il comprend une zone de délivrance d'objets au niveau du point fixe destinée à recueillir les objets en provenance du plan incliné formé par la bande,
- les moyens de chargement comprennent un convoyeur,
- il comprend un convoyeur horizontal destiné à acheminer les objets au travers de la fenêtre jusqu'entre les pans de la bande,
- il comprend un carter de protection de la bande muni d'une ouverture agencée de sorte à être au regard de la fenêtre de la bande lorsqu'elle est en position de chargement des objets,
- les moyens d'enroulement comprennent un rouleau motorisé sur lequel s'enroule un pan de la bande.

L'invention concerne également un procédé d'utilisation d'un tel dispositif comprenant les étapes de :
- Chargement des objets entre les parois de la bande par la fenêtre de chargement ;
- Montée de la bande par enroulement du pan de la bande muni de la fenêtre;
- Délivrance des objets

Les dessins ci-joints sont donnés à titre d'exemples et ne sont pas limitatifs de l'invention. Ils représentent seulement un mode de réalisation de l'invention et permettront de la comprendre aisément.

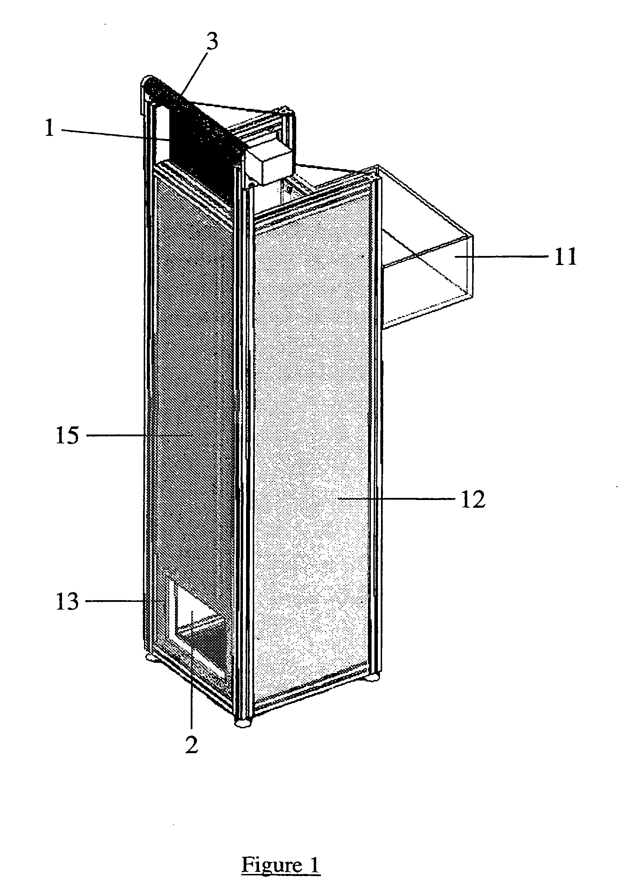

Figure 1: vue en perspective du dispositif selon l'invention.

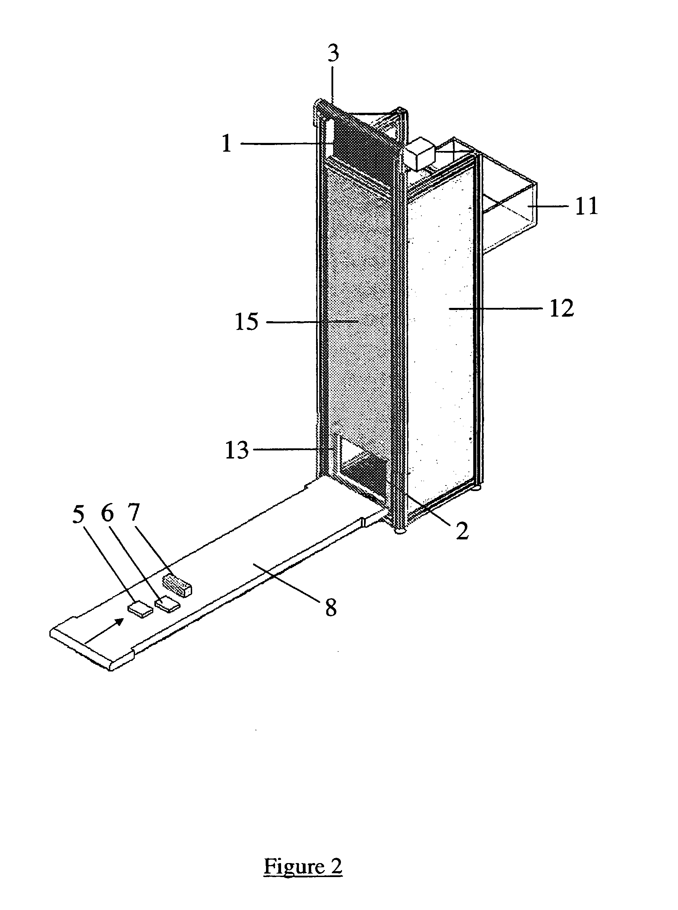

Figure 2: vue en perspective du dispositif selon la figure 1 muni d'un convoyeur transportant des objets.

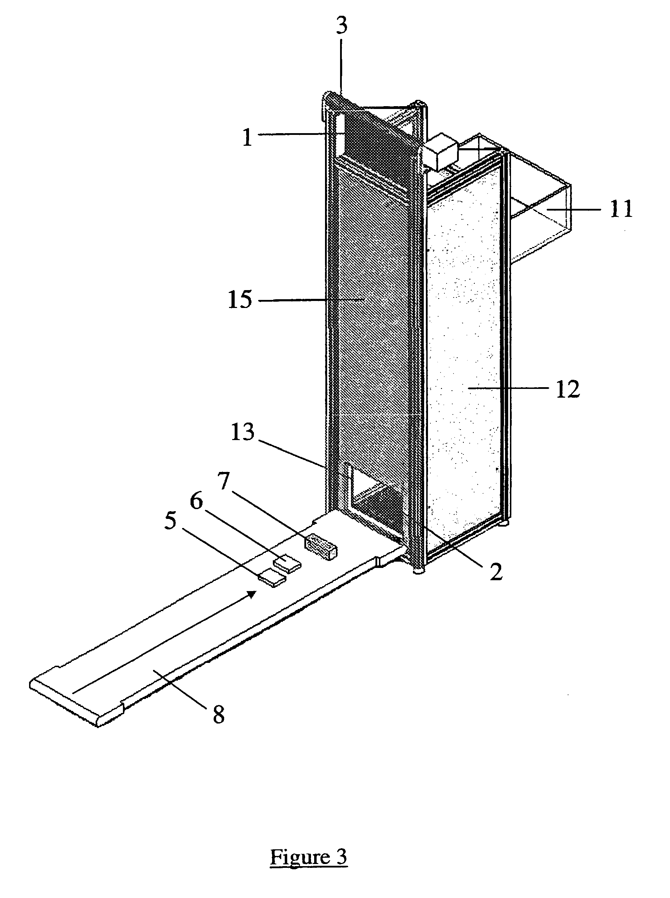

Figure 3: dispositif selon la figure 2, le convoyeur ayant déplacé les objets vers la fenêtre.

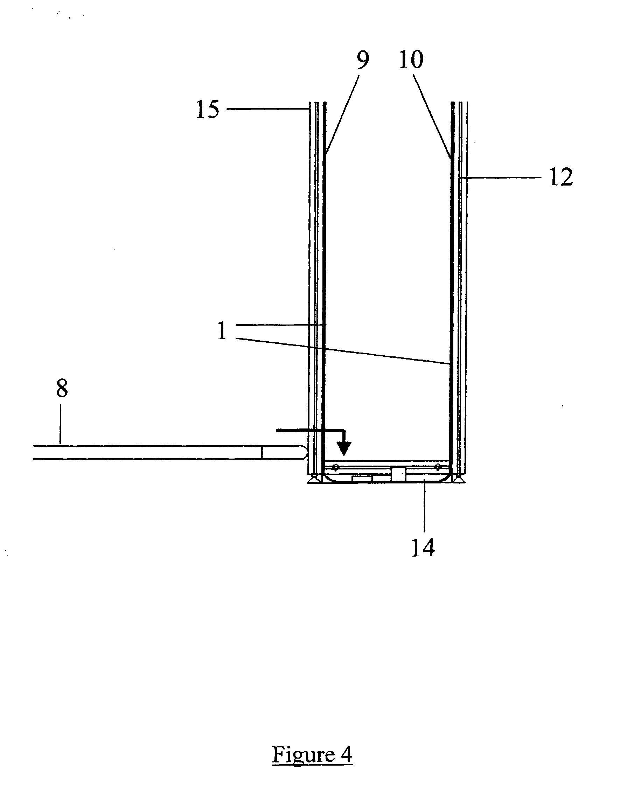

Figure 4: vue en coupe du dispositif selon la figure 2.

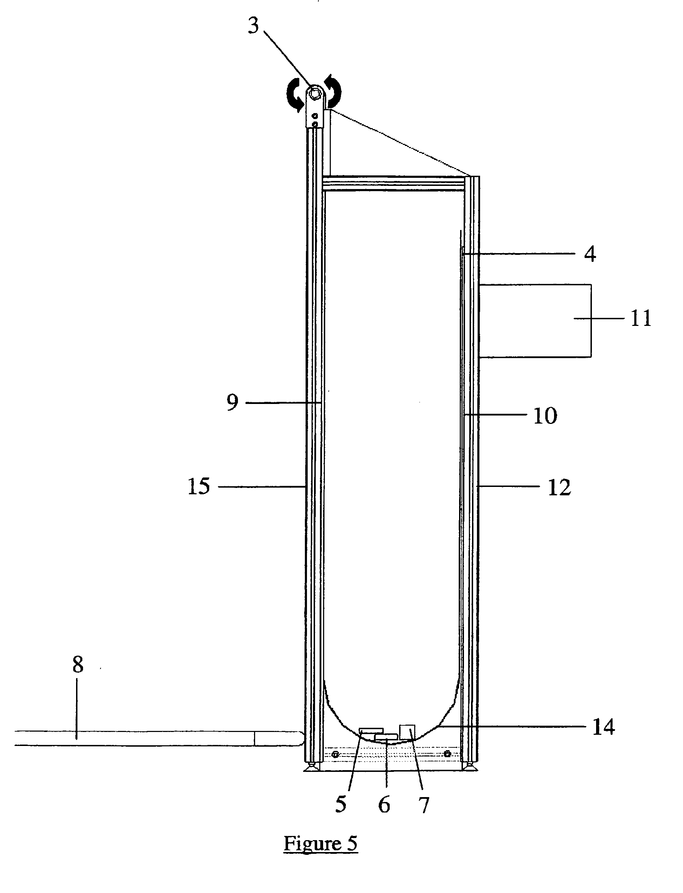

Figure 5: dispositif selon la figure 4, les moyens d'enroulement en action pour transporter des objets.

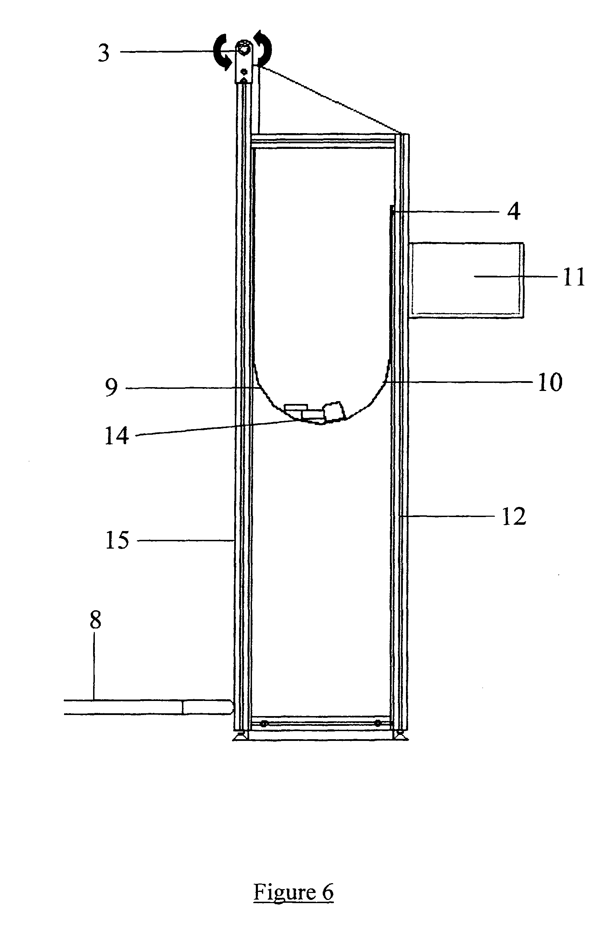

Figure 6: dispositif selon la figure 4, les objets étant transportés par la bande.

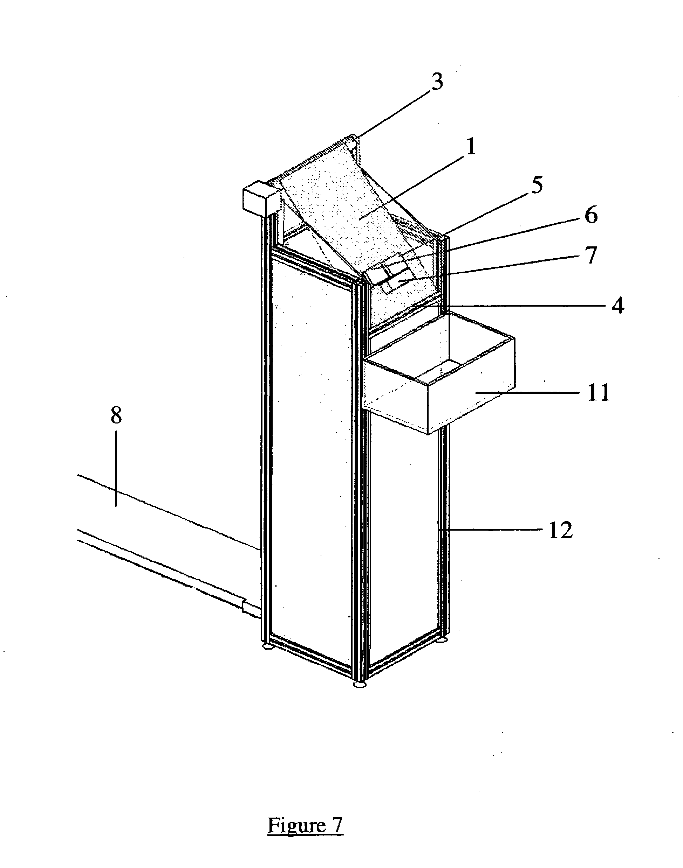

Figure 7: Vue en perspective de l'arrière du dispositif selon la figure 2, les objets étant en cours de délivrance.

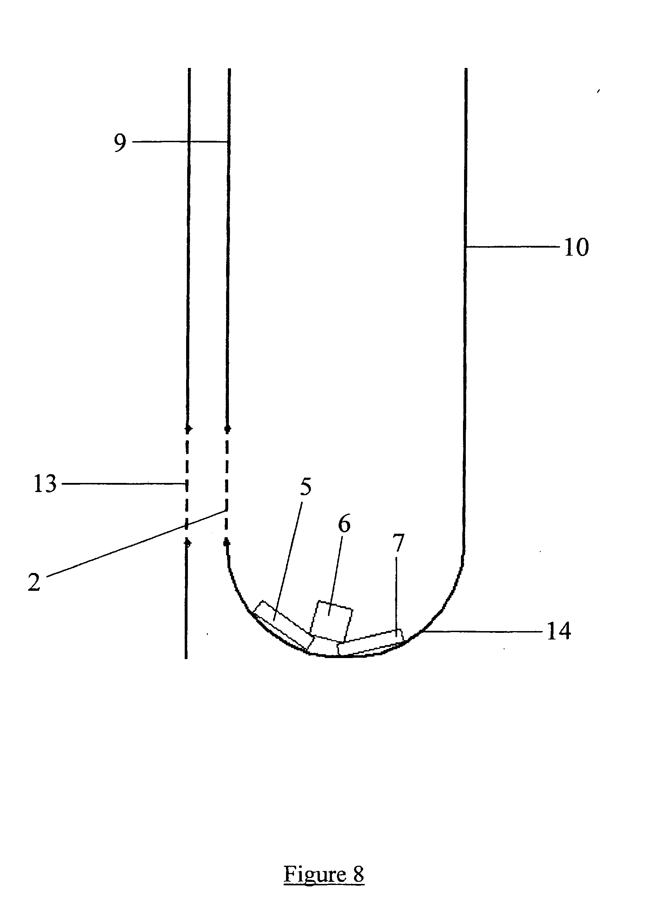

Figure 8: schéma du dispositif et des objets selon l'invention en vue de côté.

Le dispositif de transport vertical selon l'invention est destiné au transport d'objets 5, 6, 7. Les objets 5, 6, 7 sont préférentiellement des boîtes de médicaments mais d'autres types d'objets peuvent être transportés par le dispositif selon l'invention.

Les objets 5, 6, 7 sont transportés entre une zone de chargement et une zone de délivrance 11. La zone de chargement est située préférentiellement à une hauteur inférieure à la zone de délivrance 11. Ainsi, les objets 5, 6, 7 sont transportés de bas en haut.

Le dispositif comprend une bande flexible 1. Dans le mode de réalisation illustré où l'entraînement de la bande s'effectue par enroulement, la bande 1 est apte à être enroulée par les moyens d'enroulement 3, elle doit être donc suffisamment flexible. La bande 1 est préférentiellement du type d'une bande d'un tapis roulant.

La bande 1 est suspendue par ses extrémités. Selon un mode de réalisation, une de ces extrémités est fixée à un point fixe 4 et l'autre est fixée aux moyens d'enroulement 3.

La bande 1 étant suspendue entre deux points, elle prend la forme d'un U: deux pans 9, 10 sensiblement verticaux se relient au niveau d'une base 14 destinée à recevoir les objets 5, 6, 7 au niveau de la zone de chargement.

Au niveau de la zone de chargement pour introduire les objets 5, 6, 7 entre les pans 9, 10 de la bande 1, il est avantageux de prévoir une fenêtre 2 de chargement située sur l'un des pans 9, 10 de la bande 1.

Avantageusement, la fenêtre 2 de chargement est disposée en partie inférieure d'un des pans 9, 10 de la bande 1. C'est-à-dire dans la partie inférieure du U.

Dans ce cas, l'extrémité de la bande 1 reliée aux moyens d'enroulement 3 correspond au pan 9 muni de la fenêtre 2 de chargement. Ainsi, quand les moyens d'enroulement 3 seront actionnés pour enrouler la bande 1, le pan 9 s'enroulera, faisant remonter la bande et donc la fenêtre 2 évitant la chute des objets 5, 6, 7.

Le dispositif selon l'invention est très simple et ne nécessite pas de pièce particulière pour fermer la fenêtre 2 de chargement.

Les moyens d'enroulement sont selon un mode de réalisation un rouleau motorisé.

Lorsque la bande 1 s'enroule sur les moyens d'enroulement 3, la longueur de la bande 1 diminue, contribuant à l'élévation des objets 5, 6, 7.

Selon un mode de réalisation, l'un des points de fixation de l'extrémité de la bande 1 est plus haut que l'autre. Ainsi, lorsque la bande 1 est tendue entre les deux points de fixation, car les moyens d'enroulement 3 ont enroulé toute la longueur libre de la bande 1, la bande 1 forme un plan incliné où les objets 5, 6, 7 glissent vers la zone de délivrance 11, ce qui optimise la délivrance des objets 5, 6, 7.

Préférentiellement, le point de fixation le plus haut correspond aux moyens d'enroulement 3 et le point le plus bas correspond au point de fixation 4. Les objets 5, 6, 7 sont délivrés au point le plus bas. Si les objets 5, 6, 7 à délivrer doivent être délivrés du même côté que la fenêtre de chargement 2, alors les moyens d'enroulement 3 sont disposés pour être plus bas que le point fixe 4.

De sorte à automatiser entièrement le système, le dispositif selon l'invention comprend des moyens de chargement destinés à acheminer les objets 5, 6, 7 au travers de la fenêtre 2 jusqu'entre les pans 9,10 de la bande. A titre d'exemple, les moyens de chargement comprennent un convoyeur 8 est placé en face de la fenêtre 2 de sorte à transporter les objets 5, 6, 7 jusqu'à la base 14 de la bande 1. On peut aussi mettre en oeuvre des moyens de poussée, à vérin notamment. Les moyens de chargements déplacent préférentiellement les objets 5, 6, 7 suivant un plan horizontal. Néanmoins, d'autres déplacements comprenant une composante verticale peuvent être réalisés par les moyens de chargement. De même, au niveau de la zone de délivrance 11, un réceptacle ou un second convoyeur, est agencé pour recueillir les objets 5, 6, 7.

Ainsi, le dispositif selon l'invention peut être associé à d'autres dispositifs de délivrance, stockage ou autres d'objets.

La bande 1 et les moyens d'enroulement 3 sont préférentiellement disposés dans un carter 12 de sorte à les protéger. Le carter 12 comprend avantageusement quatre panneaux sensiblement verticaux de sorte à former un caisson autour de la bande 1 et des moyens d'enroulement 3. Un des panneaux 15 comprend une ouverture d'introduction 13. L'ouverture d'introduction 13 et la fenêtre 2 de chargement sont disposées pour être en regard l'une de l'autre lorsque la bande 1 est en position de chargement d'objet. On entend par position de chargement, la position où la bande 1 est déroulée pour que la base du U se situe au niveau de la zone de chargement d'objets 5, 6, 7. En partie supérieure, le carter 12 est configuré pour permettre la délivrance des objets 5, 6, 7, au niveau de la zone de délivrance 11.

Dans ce mode de réalisation, les moyens de chargement sont configurés pour acheminer les objets 5, 6, 7 tout d'abord à travers l'ouverture d'introduction 13 du carter 12 puis jusqu'aux pans 9, 10 au travers de la fenêtre 2 de chargement de la bande 1.

Le principe de fonctionnement du dispositif selon l'invention comprend avantageusement trois étapes : Procédé d'utilisation

### Etape 1: le chargement des objets 5, 6, 7 par la fenêtre 2 de chargement.

Les objets 5, 6, 7 sont placés entre les pans 9, 10 de la bande 1 en passant au travers de la fenêtre 2 et selon les modes de réalisation en passant au travers de l'ouverture d'introduction 13 du carter 12. Les objets 5, 6, 7 peuvent être placés manuellement entre les pans 9, 10 de la bande 1 ou être disposés automatiquement par les moyens de transport tel le convoyeur 8.

### Etape 2: Montée de la bande par enroulement.

L'extrémité du pan 9 de la bande 1 s'enroule autour des moyens d'enroulement 3, la fenêtre 2 de la bande 1 se déplace et n'est plus en regard de l'ouverture d'introduction 13 du carter 12. Les objets 5, 6, 7 subissent un mouvement de rotation généré par la montée de la bande 1, ce qui les éloigne de la fenêtre 2 et évite ainsi leur chute.

### Etape 3: Délivrance des objets 5, 6, 7.

Lorsque la bande 1 est tendue entre le point fixe 4 et les moyens d'enroulement 3, celle-ci forme un plan incliné facilitant le mouvement des objets 5, 6, 7 en direction du point le plus bas, préférentiellement le point fixe 4, de sorte les orienter vers la zone de délivrance 11.

### REFERENCES

- 1.: Bande
- 2.: Fenêtre de chargement
- 3.: Moyens d'enroulement
- 4.: Point fixe
- 5.: Objet
- 6.: Objet
- 7.: Objet
- 8.: Convoyeur
- 9.: Pan
- 10.: Pan
- 11.: Zone de délivrance
- 12.: Carter
- 13.: Ouverture d'introduction du carter
- 14.: Base
- 15.: Panneau

## Revendications

1. Dispositif de transport vertical d'objets comprenant une bande (1) flexible et des moyens d'entraînement,
la bande (1) est suspendue par une première extrémité à un point fixe et par une deuxième extrémité aux moyens d'entrainement de sorte à prendre une forme en U, avec deux pans (9, 10) sensiblement verticaux, de manière à recevoir les objets (5,6,7) entre les deux pans (9, 10), le dispositif comprend des moyens de chargement destinés à acheminer les objets (5,6,7) au travers d'une fenêtre (2) jusqu'entre les pans (9, 10) de la bande (1), **caractérisé par le fait que** un des deux pans (9, 10) de la bande (1) comprend une fenêtre (2) formée dans la bande (1) destinée au passage des objets (5,6,7) entre les deux pans (9, 10) de la bande (1), et que les moyens d'entraînement (3) sont des moyens d'enroulement (3) du pan (9) de la bande (1) muni de la fenêtre (2)

2. Dispositif selon la revendication précédente dans lequel les moyens d'enroulement (3) sont agencés pour être plus hauts que le point fixe (4).

3. Dispositif selon la revendication précédente dans lequel la bande forme un plan incliné en direction du point fixe (4) lorsqu'elle est tendue entre les moyens d'enroulement (3) et le point fixe (4).

4. Dispositif selon la revendication précédente comprenant une zone de délivrance (11) d'objets au niveau du point fixe (4) destinée à recueillir les objets (5,6,7) en provenance du plan incliné formé par la bande (1).

5. Dispositif selon l'une quelconque des revendications précédentes dans lequel les moyens de chargement comprennent un convoyeur (8).

6. Dispositif selon l'une quelconque des revendications 1 à 5 comprenant un convoyeur (8) horizontal destiné à acheminer les objets (5, 6, 7) au travers de la fenêtre (2) jusqu'entre les pans (9, 10) de la bande (1).

7. Dispositif selon l'une quelconque des revendications 1 à 6 comprenant un carter (12) de protection de la bande (1) muni d'une ouverture (13) agencée de sorte à être au regard de la fenêtre (2) de la bande (1) lorsque celle-ci est en position de chargement.

8. Dispositif selon l'une quelconque des revendications 2 à 7 dans lequel les moyens d'enroulement (3) comprennent un rouleau motorisé sur lequel s'enroule un pan (9, 10) de la bande (1).

9. Procédé d'utilisation du dispositif selon l'une quelconque des revendications 2 à 8 comprenant les étapes de :
- chargement des objets (5, 6, 7) entre les pans (9, 10) de la bande (1) par la fenêtre (2) de chargement ;
- montée de la bande (1) par enroulement du pan (9) de la bande (1) muni de la fenêtre (2) ;
- délivrance des objets (5, 6, 7)

## Claims

1. A device for vertically conveying objects comprising flexible belt (1) and means for driving,
the belt (1) is suspended by a first end to a fixed point and by a second end to means for driving so as to form a U, with two sides (9, 10) appreciably vertical, so as to receive objects (5, 6, 7) between two sides (9, 10), the device comprising means for loading in order to convey objects (5, 6, 7) through a window (2) up to between sides (9, 10) of belt (1), **characterized in that** one of the two sides (9, 10) of belt (1) has a window (2) formed in belt (1 ) to allow the passage of objects (5, 6, 7) between two sides (9, 10) of belt (1), and that the means for driving (3) are means for winding (3) of side (9) of belt (1) comprising window (2).

2. Device according to the above claim in which means for winding (3) are arranged so as to be higher than fixed point (4).

3. Device according to the previous claim in which the belt forms a flat surface sloping in the direction of fixed point (4) when stretched between means for winding (3) and fixed point (4).

4. Device according to the previous claim comprising a zone (11) for delivering objects to a fixed point (4) designed to receive objects (5, 6, 7) from the inclined plane formed by belt (1).

5. Device according to any one of the previous claims in which the means for loading consist of a conveyor (8).

6. Device according to any one of claims 1 to 5 comprising a horizontal conveyor (8) designed to transport objects (5, 6, 7) through window (2) up to between sides (9, 10) of belt (1).

7. Device according to any one of claims 1 to 6 including a housing (12) protecting belt (1) equipped with an opening (13) arranged so as to be opposite window (2) of belt (1) when this is in the loading position.

8. Device according to any one of claims 2 to 7 in which means for winding (3) include a motor-driven roller on which winds one side (9, 10) of belt (1).

9. Method for using the device according to any one of claims 2 to 8 comprising the following stages:
- loading of objects (5, 6, 7) between sides (9, 10) of belt (1) through loading window (2);
- raising belt (1) by winding up side (9) of belt (1) equipped with window (2);
- delivery of objects (5, 6, 7).

## Patentansprüche

1. Vorrichtung zum senkrechten Transport von Gegenständen mit einem flexiblen Band (1) und Antriebsmitteln, bei der das Band (1) an einem ersten Ende an einem Fixpunkt aufgehängt ist und am zweiten Ende an den Antriebsmitteln, so dass sie eine U-Form annimmt, mit zwei annähernd senkrechten Flächen (9, 10), so dass Gegenstände (5, 6, 7) zwischen den beiden Flächen (9, 10) aufgenommen werden können, die Vorrichtung besitzt Beschickungsmittel, um die Gegenstände (5, 6, 7) durch ein Fenster (2) zwischen die Flächen (9, 10) des Bandes (1) zuzuführen, **gekennzeichnet dadurch, dass** eine der beiden Flächen (9, 10) des Bandes (1) ein im Band (1) ausgebildetes Fenster (2) besitzt, das als Durchlass für die Gegenstände (5, 6, 7) zwischen den beiden Flächen (9, 10) des Bandes (1) bestimmt ist, und dass die Antriebsmittel (3) die Mittel zum Aufrollen (3) der Fläche (9) des Bandes (1), in dem sich das Fenster (2) befindet, sind.

2. Vorrichtung gemäß vorstehendem Patentanspruch, bei dem die Aufrollmittel (3) so angeordnet sind, dass sie oberhalb des Fixpunktes (4) liegen.

3. Vorrichtung gemäß vorstehendem Patentanspruch, bei dem das Band eine geneigte Fläche in Richtung des Fixpunktes (4) bildet, wenn es zwischen den Aufrollmitteln (3) und dem Fixpunkt (4) gespannt ist.

4. Vorrichtung gemäß vorstehendem Patentanspruch mit einer Ausgabezone (11) für Gegenstände auf Höhe des Fixpunktes (4), bestimmt zum Empfang der aus der vom Band (1) gebildeten, geneigten Fläche ankommenden Gegenstände (5, 6, 7).

5. Vorrichtung gemäß einem der vorstehenden Patentansprüche, bei der die Beschickungseinrichtungen einen Förderer (8) besitzen.

6. Vorrichtung gemäß einem der Patentansprüche 1 bis 5, mit einem horizontalen Förderer (8) zur Zuführung der Gegenstände (5, 6, 7) durch das Fenster (2) bis zwischen die Flächen (9, 10) des Bandes (1).

7. Vorrichtung gemäß einem der Patentansprüche 1 bis 6 mit einem Gehäuse (12) zum Schutz des Bandes (1), mit einer derart angeordneten Öffnung (13), dass sie dem Fenster (2) im Band (1) gegenüberliegt, wenn dieses in Beschickungsposition ist.

8. Vorrichtung gemäß einem der Patentansprüche 2 bis 7, bei dem die Aufrollmittel (3) eine motorisierte Walze besitzen, auf die eine Fläche (9, 10) des Bandes (1 ) aufgerollt wird.

9. Verfahren zur Anwendung der Vorrichtung gemäß einem der Patentansprüche 2 bis 8 mit folgenden Schritten :
- Zuführung der Gegenstände (5, 6, 7) zwischen die Flächen (9, 10) des Bandes (1) durch das Beschickungsfenster (2),
- Hochfahren des Bandes (1) durch Aufrollen der Fläche (9) des Bandes (1) mit dem Fenster (2),
- Ausgabe der Gegenstände (5, 6, 7).
